# FASCICULE DE BREVET EUROPEEN

(11) **EP 2 414 152 B1**
(45) Date de publication et mention de la délivrance du brevet: **16.07.2014**
(21) Numéro de dépôt: 10711911.7
(22) Date de dépôt: 31.03.2010
(51) Int. Cl.: B29C 70/38

(54) **PROCEDE ET MACHINE POUR L'APPLICATION D'UNE BANDE DE FIBRES SUR DES SURFACES CONVEXES ET/OU AVEC ARETES**
VERFAHREN UND MASCHINE ZUM AUFBRINGEN EINER FASERBAHN AUF KONVEXE UND/ODER GERIFFELTE FLÄCHEN
METHOD AND MACHINE FOR APPLYING A FIBER WEB ONTO CONVEX AND/OR RIDGED SURFACES

(30) Priorité: 02.04.2009 FR 0952144
(43) Date de publication de la demande: 08.02.2012
(73) Titulaire: Coriolis Composites, 56530 Queven (FR)
(72) Inventeur: MUNAUX, Olivier, F-56270 PLOEMEUR (FR); CAPPELLE, Hervé, F-56100 LORIENT (FR); HAMLYN, Alexander, F-56270 Ploemeur (FR)
(86) Numéro de dépôt international: PCT/EP2010/054377
(87) Numéro de publication internationale: WO 2010/112573

(56) Documents cités:
- DE-A1-102007 009 124
- JP-A- 2005 329 593
- US-A- 4 351 688
- US-A- 4 569 716
- US-A- 4 990 213
- US-A- 4 992 133
- US-A- 4 997 513
- US-A- 5 700 347

## Description

La présente invention concerne un procédé et une machine d'application de fibres pour la réalisation de pièces en matériaux composites, plus particulièrement un procédé et une machine pour l'application d'une bande de fibres sur des surfaces convexes et/ou avec des arêtes.

Il est connu des machines d'application de fibres, appelées couramment machines de placement de fibres, pour l'application sur un moule mâle ou femelle d'une bande large formée de plusieurs fibres plates, de type rubans, imprégnées de résine, notamment des fibres de carbone imprégnées d'une résine thermodurcissable ou thermoplastique. Ces machines, telles que décrites dans le document brevet WO2006/092514 comprennent classiquement une tête d'application de fibres, apte à appliquer sur une surface d'application d'un moule une bande formée de plusieurs fibres plates, et un système de déplacement de ladite tête d'application de fibres.

La tête d'application de fibres, appelée également tête de placement de fibres, comprend classiquement un rouleau de compactage destiné à venir en contact contre le moule selon une ligne de contact pour appliquer la bande de fibres, et des moyens de guidage des fibres sous la forme d'une bande sur ledit rouleau de compactage.

Le système de déplacement assure le déplacement de la tête d'application selon au moins trois directions perpendiculaires les unes aux autres. Le système de déplacement peut être formé par un bras poly-articulé de type robot standard six axes, disposé au sol ou monté sur un axe linéaire, avec un poignet d'extrémité auquel est fixée la tête d'application, ou par un robot cartésien de type portique équipé d'un poignet d'extrémité portant la tête d'application.

Lors de l'application ou dépose des fibres par le rouleau de compactage, ce dernier maintient une pression continue sur la surface d'application du moule pour évacuer progressivement l'air emprisonné entre les bandes de fibres déposées. Après application de plusieurs couches de bandes superposées, la pièce résultante est durcie sous vide par passage dans un four, généralement autoclave.

Cette opération de compactage lors de la dépose permet d'obtenir une pièce avant opération de durcissement dont les dimensions correspondent sensiblement à celles de la pièce finale obtenue après durcissement.

Dans le cas de l'application de bande formée d'un nombre important de fibres, par exemple de huit fibres, ces machines d'application et les logiciels de programmation de placement de fibres proposés à ce jour ne permettent pas de déposer une bande de fibres sur des arêtes ou sur des surfaces convexes de faible rayon de courbure, par exemple inférieur à 10 mm, tout en compactant toutes les fibres de la bande, et dans des orientations de 45° ou 135° environ par rapport à l'arête ou la génératrice de la surface convexe.

En l'absence de compactage, l'évacuation des bulles d'air est réalisée uniquement lors du durcissement sous vide, la pièce finale présente alors des plis de surplus de matière au niveau desdites arêtes ou surfaces convexes.

A ce jour, ces différentes pièces avec arêtes et/ou surfaces convexes sont obtenues par réalisation de pièces planes au moyen d'une machine d'application du type précité, puis par une opération de pliage et/ou de cintrage des pièces planes avant durcissement. Outre le fait de nécessiter une opération supplémentaire complexe, cette opération de pliage ou cintrage conduit également à la formation de plis au niveau des couches intérieures, qui affecte les propriétés de résistance de la pièce finale.

De ce fait, les machines d'application proposées à ce jour ne sont pas utilisées pour des pièces essentielles, notamment dans le secteur aéronautique, telles que les longerons de voilure d'avion, poutres de pales d'éoliennes, profils aérodynamiques, ferrures ou renforts dits en L.

Le document JP2005329593 décrit une machine d'application dans laquelle l'unité de compactage comprend un rouleau de compactage chauffant et une plaque de re-compactage qui compacte à nouveau la bande immédiatement après le compactage par le rouleau de compression. L'unité de compactage est utilisée de sorte qu'à la fois le rouleau de compactage et la plaque de décompactage viennent contre la surface d'application.

Les documents US5700347, US4990213, et DE102007009124 décrivent des machines d'application comprenant un patin de refroidissement disposé en aval du rouleau de compactage.

Le document US 4992133 décrit une machine pour lier ensemble au moins deux fibres, la machine comprenant une tête, une surface support et des moyens d'amenée pour amener les deux fibres entre la tête et la surface support. La tête comprend des moyens de compression et des moyens de chauffage montés pivotant par rapport aux moyens de compression, en amont des moyens de compression, une courroie étant montée entre les moyens de compression et les moyens de chauffage. Les moyens de chauffage comprennent un élément conducteur de chaleur avec une surface inférieure incurvée correspondant à la forme de la surface support. Les moyens de compression comprennent une pluralité de plaques de compression décalées les unes des autres dans la direction d'avancement et mobiles indépendamment les unes des autres.

Le document US 4351688 décrit une machine d'application comprenant un rouleau de compactage segmenté.

Le but de la présente invention est de proposer une solution visant à pallier les inconvénients précités, qui permet la réalisation, au moyen d'une machine d'application de fibres, de pièces avec des arêtes et/ou surfaces convexes ayant de bonnes propriétés mécaniques.

A cet effet, la présente invention propose un procédé comme défini dans la revendication 1, pour l'application d'une bande formée de plusieurs fibres plates, sensiblement jointives, sur
- une surface d'application comprenant une première surface sensiblement plane et une deuxième surface sensiblement plane reliée par une arête ou par une surface arrondie, par exemple en arc de cercle,
- ou sur une surface d'application convexe, par exemple une surface cylindrique ou tronconique,
l'application de la bande étant réalisée au moyen d'une tête d'application de fibres qui comprend un système de compactage comportant un rouleau de compactage, ledit procédé comprenant la mise en contact du rouleau de compactage contre la surface d'application et le déplacement de la tête de compactage pour appliquer une bande de fibres sur la surface d'application, ledit procédé étant caractérisé en ce qu'il comprend les étapes suivantes :
- mettre en contact, contre la bande de fibres appliquée sur la surface d'application, un organe de compactage du système de compactage, disposé en aval du rouleau de compactage par rapport à la direction d'avancement de la tête, ledit organe de compactage étant en contact sensiblement contre l'ensemble des fibres de la bande selon au moins une ligne de contact,
- faire pivoter la tête autour de l'arête, autour de la surface arrondie ou autour de la surface convexe, de sorte que ledit organe de compactage reste au contact de la bande pour la compacter, selon au moins une ligne de contact, sensiblement sans glissement entre ledit organe de compactage et la surface d'application, le rouleau de compactage décrivant une courbe involute. Des formes préferentielles du procédé sont définies dans les revendications dépendantes 2 à 9.

Selon l'invention, la tête comprend un organe de compactage supplémentaire par laquelle elle est mise en contact contre la bande appliquée contre la surface d'application, selon au moins une ligne de contact, puis la tête est pivotée de manière à maintenir ledit organe de compactage contre la bande selon au moins une ligne de contact, tout en conservant une vitesse relative en translation sensiblement nulle entre ledit organe de compactage et la surface d'application, c'est-à-dire sensiblement sans glissement.

La mise en contact de l'organe de compactage est réalisée par basculement en arrière de la tête, via le système de déplacement de la tête et/ou par déplacement de l'organe de compactage par un système de déplacement propre audit organe de compactage. L'étape de pivotement est réalisée après une étape de déplacement de la tête tangentiellement à la surface d'application pour amener le rouleau de compactage au-delà de l'arête, au-delà de la ligne de jonction entre la première surface et la surface arrondie, ou au-delà de la génératrice de la surface convexe, afin de permettre l'opération de pivotement, ladite étape de mise en appui de l'organe de compactage étant réalisée simultanément ou après cette étape de déplacement.

Selon un mode de réalisation, dans le cas d'une surface d'application comprenant une première surface sensiblement plane et une deuxième surface sensiblement plane reliée par une arête, ledit procédé comprend les étapes suivantes :
- mettre en contact le rouleau de compactage contre la première surface selon au moins une ligne de contact, et déplacer la tête d'application pour appliquer une bande de fibres sur ladite première surface, selon une première direction formant un angle α1 avec l'arête,
- à l'approche de l'arête, déplacer la tête selon ladite première direction, tangentiellement à la première surface, pour amener le rouleau de compactage sensiblement au-delà de ladite arête, et simultanément ou successivement, mettre en contact de l'organe de compactage contre la bande appliquée sur la première surface,
- faire pivoter la tête autour de l'arête, de sorte que ledit organe de compactage reste au contact de la bande selon au moins une ligne de contact, ledit pivotement étant réalisé jusqu'à la mise en contact du rouleau de compactage contre la deuxième surface selon au moins une ligne de contact correspondant sensiblement à la largeur de la bande,
- écarter ledit organe de compactage de la surface d'application pour qu'il ne soit plus en contact avec cette dernière, et simultanément ou successivement, déplacer la tête pour appliquer la bande sur ladite deuxième surface, selon une deuxième direction formant un angle α2, sensiblement égale à 180-α1, avec l'arête.

Selon un autre mode de réalisation, dans le cas d'une surface d'application comprenant une première surface sensiblement plane et une deuxième surface sensiblement plane reliée par une surface arrondie, ledit procédé comprend les étapes suivantes :
- mettre en contact le rouleau de compactage contre la première surface selon au moins une ligne de contact et déplacer la tête d'application pour appliquer une bande de fibres sur ladite première surface, selon une première direction formant un angle α1 avec la première ligne de jonction, sensiblement linéaire, entre la première surface et la surface arrondie,
- à l'approche de ladite première ligne de jonction, déplacer la tête selon ladite première direction, tangentiellement à la première surface, pour amener le rouleau de compactage au-delà de ladite première ligne de jonction, et simultanément ou successivement mettre en contact l'organe de compactage contre la bande appliquée sur la première surface,
- faire pivoter, en une ou plusieurs étapes de pivotement, la tête autour de la surface arrondie, de sorte que ledit organe reste au contact de la bande selon au moins une ligne de contact, jusqu'à la mise en contact du rouleau de compactage contre la deuxième surface selon au moins une ligne de contact, et
- écarter ledit organe de compactage de la surface d'application pour qu'il ne soit plus en contact avec cette dernière, et simultanément ou successivement, déplacer la tête d'application en contact avec la deuxième surface par son rouleau de compactage selon au moins une ligne de contact pour appliquer la bande sur ladite deuxième surface, selon une direction formant un angle α2, sensiblement égale à 180-α1, avec la deuxième ligne de jonction entre la surface arrondie et la deuxième surface.

Dans ce mode de réalisation, après mise en contact de l'organe de compactage contre la bande appliquée sur la première surface, on peut
- faire pivoter la tête autour de la surface arrondie jusqu'à la mise en contact du rouleau de compactage contre la surface d'application, et
- si le rouleau de compactage est en contact selon au moins un point de contact avec la surface arrondie à l'issue dudit pivotement, déplacer la tête tangentiellement à la surface arrondie audit point de contact, dans une direction faisant un angle α1 avec la génératrice de la surface arrondie passant par ledit point de contact, avec ou sans contact de l'organe de compactage avec la surface arrondie, de préférence sans contact en écartant ledit organe de la surface arrondie, puis faire pivoter la tête autour de la surface arrondie, ces deux étapes de déplacement et de pivotement étant réitérées jusqu'à la mise en contact du rouleau de compactage contre la deuxième surface selon au moins une ligne de contact.

En variante, le déplacement de la tête précédant l'étape de pivotement est réalisé avant mise en contact du rouleau contre la surface arrondie.

La surface arrondie peut s'étendre sur un secteur angulaire supérieur à 180°.

Selon un autre mode de réalisation, dans le cas d'une surface d'application convexe, par exemple une surface cylindrique ou tronconique, ledit procédé comprend les étapes suivantes
- mettre en contact le rouleau de compactage contre la surface d'application convexe selon au moins un point de contact,
- déplacer la tête tangentiellement à la surface d'application convexe audit point de contact, dans une direction faisant un angle α1 avec la génératrice de la surface convexe passant par ledit point de contact, avec ou sans contact de l'organe de compactage avec la surface d'application convexe,
- en une ou plusieurs étapes de pivotement, faire pivoter autour de la surface d'application convexe la tête d'application en appui contre la surface d'application convexe par son organe de compactage, ledit pivotement étant réalisé de sorte que ledit organe reste au contact de la bande selon au moins une ligne de contact.

Dans ce mode de réalisation, après déplacement de la tête tangentiellement à la surface d'application convexe audit point de contact, dans une direction faisant un angle α1 avec la génératrice de la surface convexe passant par ledit point de contact, avec ou sans contact de l'organe de compactage avec la surface d'application convexe, de préférence sans contact en écartant ledit organe de la surface d'application convexe, on peut
- faire pivoter autour de la surface d'application convexe la tête d'application en appui contre la surface d'application convexe par son organe de compactage, jusqu'à la mise en contact du rouleau de compactage contre la surface d'application convexe, et
- réitérer les étapes de déplacement et de pivotement précédentes une ou plusieurs fois.

En variante, le déplacement de la tête précédant l'étape de pivotement est réalisé avant mise en contact du rouleau contre la surface d'application convexe.

Le présent procédé est avantageusement utilisé pour un angle α1 différent de 90°, de préférence compris entre 10° et 80°, de préférence entre 20 et 70°, mieux encore entre 30 et 60°, par exemple de l'ordre de 45°

La présente invention a également pour objet une machine comme définie dans la revendication 10, pour l'application de fibres, pour la réalisation de pièces en matériaux composites, utilisable pour la mise en oeuvre du procédé défini ci-dessus, comprenant :
- une tête d'application de fibres, apte à appliquer sur une surface d'application une bande formée de plusieurs fibres plates, et qui comprend un système de compactage comportant un rouleau de compactage destiné à venir en contact contre la surface d'application pour appliquer la bande, et des moyens de guidage de fibres, sous la forme d'une bande, sur ledit rouleau de compactage, et
- un système de déplacement de ladite tête d'application de fibres, caractérisée en ce que ledit système de compactage comprend en outre un organe de compactage disposé en aval dudit rouleau de compactage et présentant une surface de contact sensiblement plane, ledit organe de compactage étant apte à être amené en appui par sa surface de contact, contre une surface d'application, sur sensiblement toute la largeur d'une bande, selon au moins une ligne de contact, l'organe de compactage comprenant une bande sans fin montée sur un rouleau de renvoi amont et un rouleau de renvoi aval, les deux rouleaux étant montés, de préférence rotatifs, en aval du rouleau de compactage, parallèlement à l'axe du rouleau de compactage, le brin inférieur de la bande sans fin constituant ladite surface de contact de l'organe de compactage. Des formes préferentielles de la machine sont définies dans les revendications dépendantes 11 à 13.

Ledit organe de compactage est avantageusement formé à partir d'un matériau élastomère, de préférence recouvert d'un film anti-adhérent, tel qu'un film Téflon. La surface de contact de l'organe de compactage est avantageusement disposée au plus près du rouleau de compactage.

Selon un mode de réalisation, l'organe de compactage comprend une cale de compactage, indépendante du rouleau de compactage.

Selon un autre mode de réalisation, l'organe de compactage comprend une bande sans fin montée sur le rouleau de compactage et un rouleau de renvoi aval, ledit rouleau de renvoi aval étant monté en aval et parallèlement au rouleau de compactage, le brin inférieur de la bande sans fin constituant ladite surface de contact de l'organe de compactage.

Selon un mode de réalisation, la tête d'application comprend une structure support par laquelle ladite tête est assemblée au système de déplacement, l'organe de compactage et le rouleau de compactage sont montés sur ladite structure support de manière fixe l'un par rapport à l'autre, sans déplacement relatif de la surface de contact de l'organe de compactage par rapport à l'axe du rouleau de compactage, ledit organe de compactage est alors amené en appui contre une surface d'application par déplacement de la tête d'application par le système de déplacement de la machine. En variante, l'organe de compactage est monté mobile sur la structure support, des moyens de déplacement étant aptes à déplacer ledit organe de compactage entre une position rétractée et une ou plusieurs positions actives, par un mouvement de rotation et/ou de translation, pour amener ledit organe de compactage contre la surface d'application.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels :
- la figure 1 est une vue schématique en perspective d'une machine d'application selon un premier mode de réalisation appliquant une bande de fibres sur la surface d'application d'un moule ;
- la figure 2 est une vue schématique agrandie en perspective de la tête d'application de la machine de la figure 1, appliquant une bande de fibres sur le moule ;
- les figures 3 et 4A sont deux vues schématiques en perspective du système de compactage de la tête de la figure 2 appliquant une bande de fibres sur une surface d'application du moule comprenant une première surface sensiblement plane et une deuxième surface sensiblement plane disposées sensiblement à 90° l'une de l'autre et reliées par une surface arrondie en arc de cercle, la tête d'application étant en cours d'application de la bande sur la première surface ;

- les figures 4B à 4G sont des vues schématiques en perspective analogues à celle de la figure 4A, illustrant différentes positions de la tête d'application lors de l'application de la bande de fibres sur la première surface, la surface arrondie et la deuxième surface, avec une orientation de l'ordre de 45° ;
- la figure 5 est une vue schématique agrandie de côté de la surface d'application de la figure 3, sur laquelle est illustrée la trajectoire d'un point du rouleau en projection verticale lors du déplacement de la tête pour appliquer la bande de fibres sur la surface arrondie ;
- la figure 6 est une vue de dessus de la bande de fibres appliquée sur la première surface de la surface d'application de la figure 3 ;
- les figures 7A et 7B sont respectivement une vue en perspective et une vue de côté du système de compactage d'une tête d'application selon un deuxième mode de réalisation de l'invention ; et,
- les figures 8A et 8B sont respectivement une vue en perspective et une vue de côté du système de compactage d'une tête d'application selon un troisième mode de réalisation de l'invention.

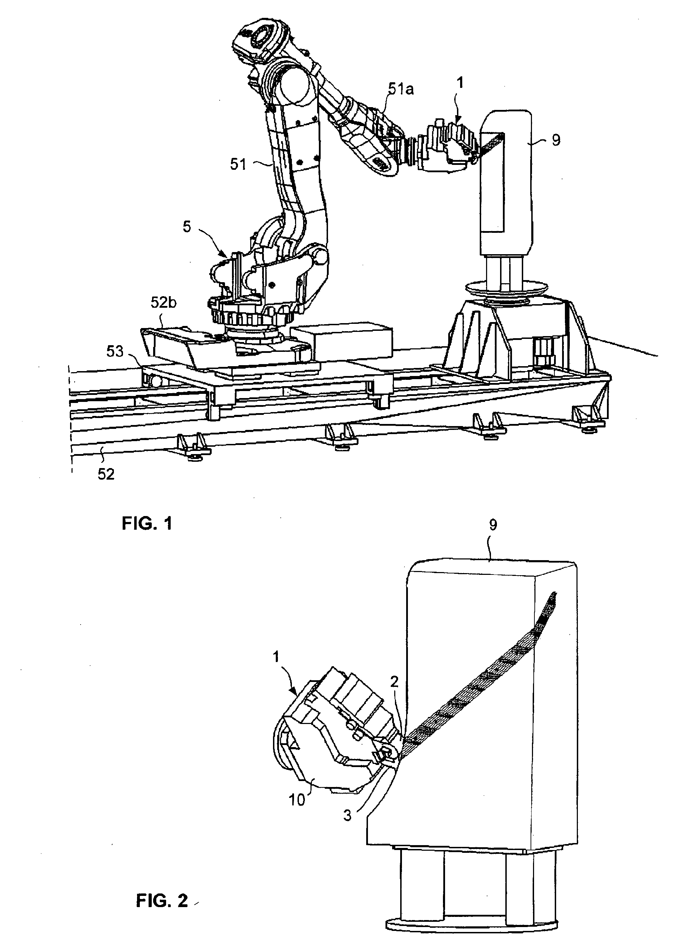

En référence à la figure 1, la machine d'application de fibres comprend une tête d'application 1 de fibres et un système de déplacement 5 pour déplacer ladite tête d'application de fibres dans toutes les directions. Le système de déplacement comprend ici un bras poly-articulé 51, du type robot six axes, connu en soi, monté mobile sur un axe linéaire 52, et dont le poignet d'extrémité 51a est équipé de la tête d'application 1. Le bras poly-articulé est fixé par son embase 52b sur un chariot 53 monté coulissant sur l'axe linéaire 52, ledit axe linéaire étant constitué de deux rails parallèles fixés au sol. Le chariot est équipé de moyens d'entraînement, par exemple de type galets motorisés asservis par une unité de commande pour le déplacement de la tête d'application le long de ces rails. La machine d'application de fibres comprend en outre des moyens de stockage de fibres et des moyens d'acheminement (non représentés) pour acheminer des fibres depuis lesdits moyens de stockage vers la tête d'application. Les fibres seront avantageusement stockées en bobine sur un cantre, monté par exemple sur un chariot suiveur coulissant sur l'axe 52, et acheminées individuellement jusqu'à la tête d'application via des tubes flexibles d'acheminement, tel que décrit dans le document brevet WO2006/092514.

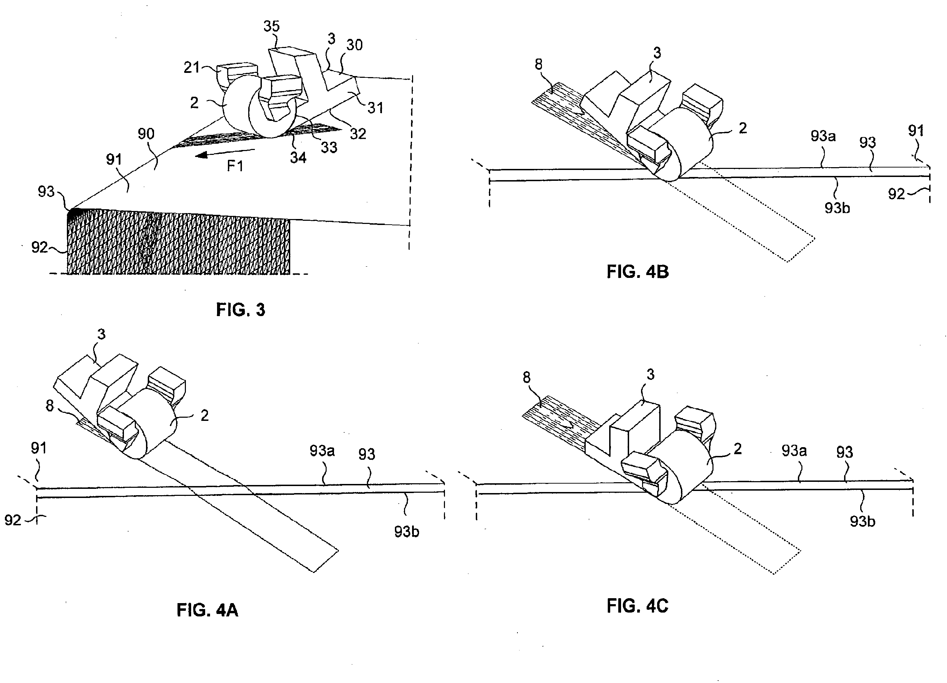

En référence aux figures 2 et 3, la tête d'application de fibres comprend une structure support 10, par laquelle la tête est montée à l'extrémité du poignet du robot, et sur laquelle sont montés des moyens de guidage de fibres et un système de compactage comprenant un rouleau de compactage 2. Les moyens de guidage guident les fibres entrant dans la tête vers le rouleau de compactage sous la forme d'une bande de fibres pré-imprégnées de résine, les fibres de la bande étant disposées côte à côte de manière sensiblement jointives. Par déplacement de la tête par le robot, le rouleau de compactage, connu en soi, est apte à être amené en contact avec la surface d'application d'un moule 9 pour appliquer la bande formée de plusieurs fibres. La tête est par exemple une tête du type décrit dans le document brevet FR 2 913 365. Ledit rouleau de compactage 2 est monté rotatif sur la structure support 10, de manière amovible, via des supports latéraux 21. Le rouleau est constitué d'un matériau élastomère revêtu d'un matériau antiadhésif, par exemple en Téflon. La largeur du rouleau est légèrement supérieure à la largeur de la bande, qui est formée de 8 fibres dans le mode de réalisation illustré.

Le système de compactage comprend en outre un organe de compactage formé dans ce mode de réalisation d'une cale de compactage 3 disposée en aval dudit rouleau de compactage par rapport à la direction d'avancement de la tête, représentée par la flèche référencée F1 sur la figure 3, pour l'application d'une bande de fibres sur une surface d'application. Suivant la figure 3, la cale de compactage est constituée d'un bloc 30, par exemple sensiblement parallélépipédique, dont la largeur, défini par la distance entre les deux faces latérales 31 du bloc, est sensiblement égale à la largeur du rouleau de compactage 2. La face inférieure du bloc constitue une surface dite de contact 32, sensiblement plane, par laquelle ladite cale de compactage est destinée à venir en appui selon au moins une ligne de contact sur toute la largeur de la bande venant d'être déposée par le rouleau de compactage.

Dans le présent mode de réalisation, la cale de compactage est montée sur la structure support 10, de manière fixe, par l'intermédiaire d'un bras d'assemblage 35 central, derrière le rouleau de compactage, de sorte que sa surface de contact 32 soit disposée tangentiellement au rouleau de compactage, la mise en contact de la tête contre la bande de fibres venant d'être déposée étant obtenue par basculement en arrière de la tête via le bras poly-articulé 51.

La face avant du bloc, disposée du côté du rouleau, présente avantageusement une surface concave 33 dont le rayon de courbure est adapté à celui du rouleau pour monter la cale, et en particulier sa surface de contact 32, au plus près du rouleau. Avantageusement, le bord avant 34 défini entre la surface concave 33 et la surface de contact 32 a une hauteur aussi réduite que possible, ledit bord avant 34 étant quasi linéaire. Les moyens de guidage amènent les fibres contre le rouleau de compactage, les fibres passant entre le rouleau et la cale de compactage, sensiblement sans contact avec cette dernière. Le bloc est avantageusement formé d'un matériau élastomère analogue à celui du rouleau, la face inférieure étant avantageusement revêtue d'un film anti-adhérent, par exemple un film Téflon, constituant la surface de contact 32.

La tête équipée de ce système de compactage est avantageusement utilisée pour la dépose d'une bande de fibres sur une surface d'application présentant une arête ou une surface convexe pour garantir un bon compactage de la bande au niveau de ladite arête ou surface de convexe, en particulier lorsque la bande appliquée forme un angle avec l'arête ou la surface convexe, par exemple de 45° ou 135°.

Une description du procédé d'application d'une bande au moyen de la machine d'application de fibres selon l'invention sur une surface d'application d'un moule va à présent être effectuée en référence aux figures 3, 4A à 4G, 5 et 6, dans le cas d'une surface d'application 90 comprenant une première surface 91 sensiblement plane et une deuxième surface 92 sensiblement plane reliées par une surface arrondie 93 en arc de cercle.

Les deux surfaces 91 et 92 sont disposées à 90° l'une de l'autre, la surface arrondie 93 s'étend en arc de cercle sur un secteur angulaire de 90°. Les références 93a et 93b désignent respectivement la première ligne de jonction sensiblement linéaire entre la première surface 91 et la surface arrondie 93 et la deuxième ligne de jonction sensiblement linéaire entre la deuxième surface et la surface arrondie.

Les première et deuxième surfaces sont dites sensiblement planes. Dans la présente, on entend par « surface sensiblement plane », une surface plane, ainsi que le cas d'une surface concave ou convexe, dont la convexité ou la concavité est suffisamment faible pour permettre la mise en appui du rouleau sur ladite surface sur toute sa largeur, afin de compacter l'ensemble des fibres de la bande, le rouleau en matériau élastomère pouvant le cas échéant se déformer légèrement pour garantir cette mise en appui.

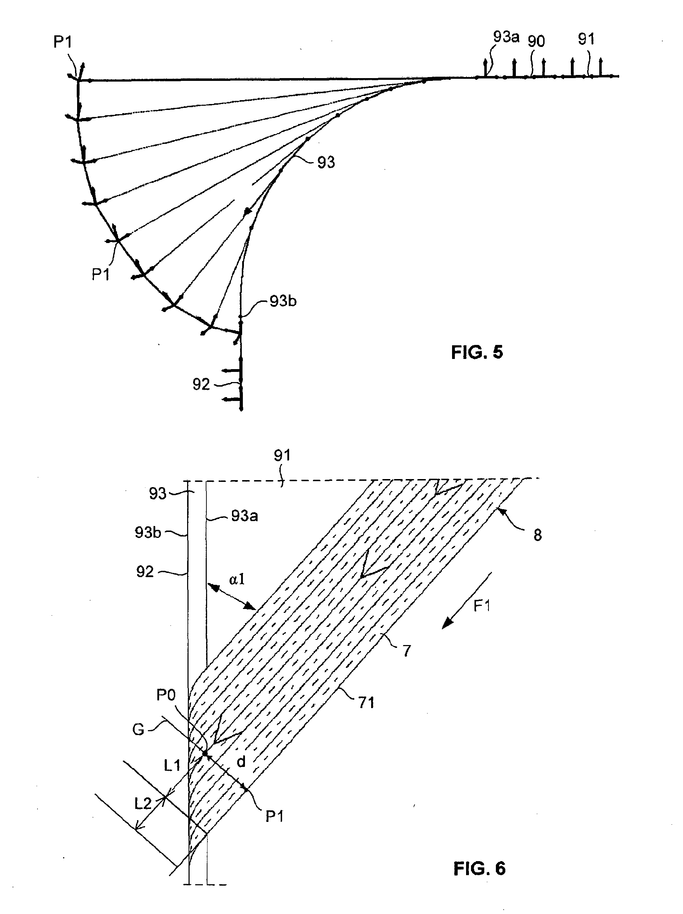

En référence aux figures 3, 4A et 6, la tête d'application dépose une bande 8 de fibres 7 sur la première surface 91. La tête d'application est classiquement en appui contre la première surface 91 par le rouleau de compactage 2, selon au moins une ligne de contact. En pratique, le rouleau en matériau déformable est en appui selon une bande étroite. La tête est déplacée selon la direction F1 pour appliquer une bande formant un angle α1 (Fig. 6) avec la première ligne de jonction 93a.

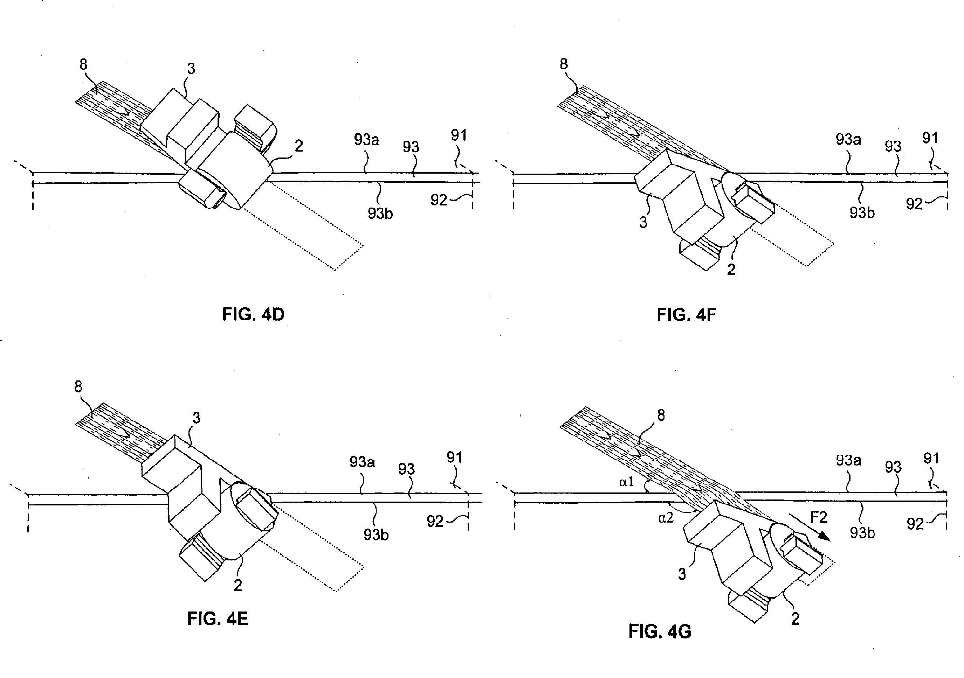

La tête est déplacée dans la même direction F1, jusqu'à la première ligne de jonction 93a, tel qu'illustrée à la figure 4B. Pour paramétrer la trajectoire de la tête d'application, on définit un point origine Po de la tête qui correspond par exemple au milieu de la génératrice G du rouleau au contact de la surface. La tête d'application est déplacée jusqu'à ce que le point origine Po soit sensiblement sur la première ligne de jonction.

En référence aux figures 5 et 6, la tête d'application est déplacée dans la même direction F1, tangentiellement à la première surface 91, sur une distance L1, de sorte que le bord de la fibre extérieure 71 de la bande appliquée sur la première surface soit au niveau de la première ligne de jonction. Pour une largeur de bande égale à 2d, ladite distance L1 est égale d/tanα1.

Le déplacement de la tête dans la direction F1, tangentiellement à la première surface, est poursuivi sur une distance L2, cette distance L2 étant au moins à la longueur de fibre nécessaire pour son enroulement sur la surface arrondie entre les deux lignes de jonction, additionnée de la distance séparant la génératrice G du rouleau de la cale de compactage.

La tête d'application est ensuite inclinée en arrière pour mettre la cale de compactage 3 en appui contre la première surface, la surface de contact 32 de la cale contre la bande de fibres appliquée sur ladite première surface, tel qu'illustrée à la figure 4C. Le basculement en arrière de la tête pour plaquer la cale de compactage est réalisé à l'issue ou lors de déplacement de la tête sur les distances L1 et L2 ou sur la distance L2, de préférence à l'issue dudit déplacement pour éviter tout glissement de la cale par rapport aux fibres.

La tête pivote ensuite autour de la surface arrondie 93, tel qu'illustrée à la figure 4D suivant une trajectoire qui permet de maintenir la cale de compactage au contact du moule sensiblement selon au moins une ligne de contact, tout en conservant une vitesse relative nulle entre la cale et le moule. Le pivotement est réalisé jusqu'à ce que le rouleau vienne en appui sur la deuxième surface 92 selon une ligne de contact, au-delà de la deuxième ligne de jonction. La figure 5 illustre la trajectoire en projection verticale du point P1 de la génératrice de contact G du rouleau, ledit point P1 étant le point de la génératrice disposé au niveau du bord de la fibre extérieure 71 de la bande. Chaque point du rouleau décrit une courbe involute correspondant à l'enroulement d'une fibre de longueur L2 autour de l'arc décrit par la surface arrondie entre les deux lignes de jonction. A l'issu du pivotement, le point P1 arrive sur la deuxième surface 92, de sorte que le bord avant 34 de la cale de compactage soit disposé au-delà de la deuxième ligne de jonction, avec l'extrémité de ce bord avant 34 située au droit du point P1 éventuellement disposée sensiblement selon ladite deuxième ligne de jonction 93b.

Une fois que la tête a fini de pivoter autour de la surface arrondie, tel qu'illustré à la figure 4E, le rouleau de compactage est en appui selon une ligne de contact, la tête s'incline vers l'avant pour soulever la cale de compactage, afin qu'elle ne soit plus en contact avec le moule, tel qu'illustré à la figure 4F.

Une fois que la cale de compactage n'est plus en contact, la tête reprend son drapage avec seulement le rouleau de compactage au contact, suivant avec une direction F2 faisant un angle α2 par rapport à la deuxième ligne de jonction, cet angle α2 étant sensiblement égal à 180°-α1.

Dans le cas d'un rouleau et d'une cale de compactage en matériau déformable, leur capacité de déformation autorise certains écarts sur le déplacement L2, et donc certains écarts sur le positionnement de la génératrice de contact G avant et après le pivotement, tout en assurant un compactage de l'ensemble des fibres sur la surface arrondie.

Dans le présent mode de réalisation, le déplacement de la tête sur la distance L2 permet de dérouler les fibres et de décaler la cale par rapport à la première ligne de jonction sur une longueur suffisante pour permettre le compactage de la bande par la cale sur l'ensemble de la surface arrondie lors de l'opération de pivotement.

En variante, l'application de la bande sur la surface arrondie peut être effectuée en plusieurs opérations de déplacement et de pivotement, notamment lorsque l'arc d'enroulement de chaque fibre entre les deux lignes de jonction est important et/ou lorsque la cale présente une longueur inférieure audit arc d'enroulement. Dans ce cas, la tête est déplacée tangentiellement à la première surface sur une distance L1, comme précédemment, puis sur une distance L'2 inférieure audit arc d'enroulement. Après basculement de la tête pour la mise en appui de la cale, on pivote la tête jusqu'à la mise en contact du rouleau contre la surface arrondie. La tête est alors déplacée tangentiellement au point de contact sur une distance L"2 éventuellement égale à la distance L'2. Lors de ce déplacement, la cale peut être maintenue contre la surface arrondie, ou de préférence la tête est basculée en avant pour l'écarter de la surface arrondie et ainsi éviter tout glissement. Si la cale a été écartée, à l'issue du déplacement sur la distance L2, la cale est ramenée contre la surface arrondie selon une ligne de contact par basculement en arrière de la tête. La tête est ensuite pivotée, tel que décrit précédemment. Si le rouleau arrive en contact avec la deuxième surface à l'issue de ce pivotement, la tête est alors basculée en arrière pour réaliser l'application classique de la bande sur la deuxième surface. Sinon, les opérations de déplacement et pivotement sont répétées jusqu'à la mise en contact du rouleau contre la deuxième surface.

Le procédé selon l'invention peut bien entendu être adapté pour diverses surfaces d'application comprenant deux surfaces formant une arête ou reliée par une surface arrondie, notamment deux surfaces sensiblement parallèles reliées par une surface arrondie en arc de cercle sur 180° ou plus de 180°. Par ailleurs, les opérations de déplacement tangentiel et pivotement précitées peuvent être enchaînées en continu par exemple pour le drapage sur un cylindre de petit diamètre.

Dans le cas simple de deux surfaces reliées par une arête vive ou par une surface arrondie dont le rayon de courbure est suffisamment faible pour permettre un compactage de la surface arrondie par déformation élastique de la cale de compactage, la tête est déplacée d'une distance au moins égale à la distance L1 précitée, de préférence additionnée de la distance séparant ladite génératrice du bord avant de la cale de compactage, la tête est ensuite basculée en arrière pour mettre en appui la cale, puis pivotée jusqu'à la mise en appui du rouleau contre la deuxième surface.

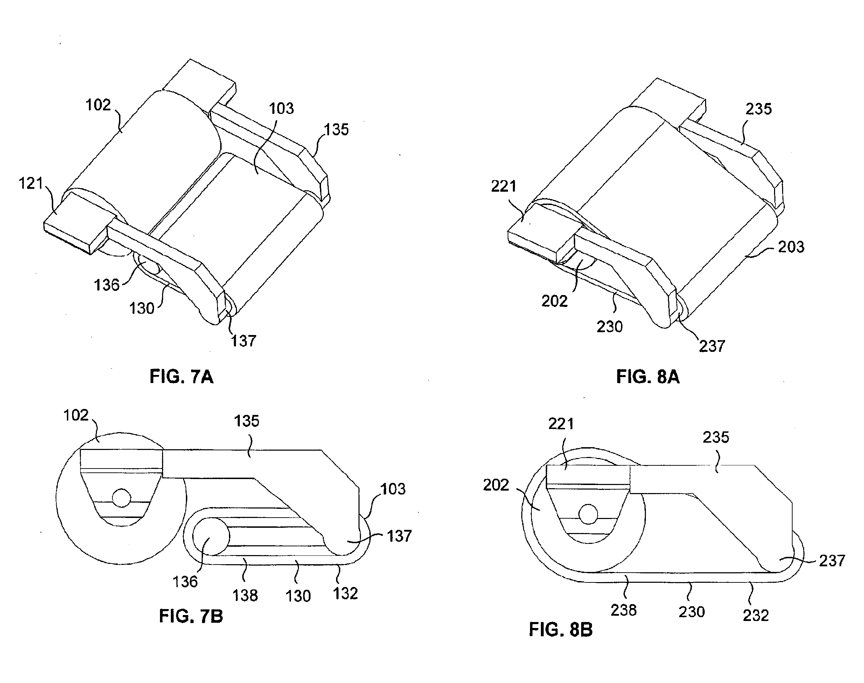

Les figures 7A et 7B illustrent un deuxième mode de réalisation d'un système de compactage pouvant être monté sur la structure support d'une tête. Le système de compactage comprend comme précédemment un rouleau de compactage 102 et un organe de compactage 103 comprenant une bande sans fin 130, ou courroie, montée sur un rouleau de renvoi amont 136 et un rouleau de renvoi aval 137. Les deux rouleaux de renvoi sont montés rotatifs sur la structure support de la tête, en aval du rouleau de compactage, parallèlement à l'axe du rouleau de compactage, le brin inférieur 138 de la bande sans fin constituant ladite surface de contact 132 par laquelle l'organe de compactage est mis en appui contre le moule.

Cette surface de contact 132 formée par une bande sans fin permet d'éviter un éventuel glissement de la surface de contact par rapport au moule lors de l'opération de pivotement, et permet de basculer la tête pour la mise en appui de cette surface de contact avant l'opération de pivotement, sans glissement par rapport à ladite surface le moule, par exemple lorsque le point d'origine P0 est sur la première ligne de jonction et/ou pendant le déplacement de la tête sur la distance L1 et/ou les distances L2, L'2 et L"2 précitées.

Avantageusement, les rouleaux de renvoi 136, 137 sont montés via un système de bras latéraux 135 sur les supports latéraux 121 du rouleau de compactage, par lesquels le système de compactage est monté de manière amovible sur la structure support de la tête.

Les figures 8A et 8B illustrent un troisième mode de réalisation du système de compactage dans lequel l'organe de compactage 203 comprend une bande sans fin 230 montée sur le rouleau de compactage 202 et un rouleau de renvoi aval 237. Ce dernier est monté en aval et parallèlement au rouleau de compactage. La bande sans fin constitue alors la surface de contact du rouleau de compactage et son brin inférieur 238 constitue ladite surface de contact 232 de l'organe de compactage. Le rouleau de renvoi aval est monté via des bras latéraux 235 aux supports latéraux 221 du rouleau de compactage.

Les bandes sans fin 130 et 230 précitées sont avantageusement constituées d'un matériau élastomère, revêtu extérieurement d'un film antiadhésif, par exemple un film de Téflon.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé d'application d'une bande (8) formée de plusieurs fibres (7), sur
- une surface d'application (90) comprenant une première surface (91) sensiblement plane et une deuxième surface (92) sensiblement plane reliée par une arête ou par une surface arrondie (93),
- ou sur une surface d'application convexe,
l'application de la bande étant réalisée au moyen d'une tête d'application (1) de fibres qui comprend un système de compactage comportant un rouleau de compactage (2, 102, 202), ledit procédé comprenant la mise en contact du rouleau de compactage contre la surface d'application et le déplacement de la tête de compactage pour appliquer une bande de fibres sur la surface d'application, ledit procédé étant **caractérisé en ce qu'**il comprend les étapes suivantes :
- mettre en contact, contre la bande de fibres appliquée sur la surface d'application, un organe de compactage (3, 103, 203) du système de compactage, disposé en aval du rouleau de compactage (2, 102, 202) par rapport à la direction d'avancement (F1, F2) de la tête, ledit organe de compactage étant en contact sensiblement contre l'ensemble des fibres de la bande selon au moins une ligne de contact,
- faire pivoter la tête autour de l'arête, autour de la surface arrondie (93) ou autour de la surface convexe, de sorte que ledit organe de compactage reste au contact de la bande pour la compacter, selon au moins une ligne de contact, sensiblement sans glissement entre ledit organe de compactage et la surface d'application.

2. Procédé selon la revendication 1, **caractérisé en ce qu'**il comprend, dans le cas d'une surface d'application comprenant une première surface sensiblement plane et une deuxième surface sensiblement plane reliée par une arête, les étapes suivantes :
- mettre en contact le rouleau de compactage (2, 102, 202) contre la première surface selon au moins une ligne de contact, et déplacer la tête d'application pour appliquer une bande (8) de fibres (7) sur ladite première surface, selon une première direction (F1) formant un angle α1 avec l'arête,
- déplacer la tête selon ladite première direction, tangentiellement à la première surface, pour amener le rouleau de compactage sensiblement au-delà de ladite arête, et mettre en contact l'organe de compactage contre la bande appliquée sur la première surface,
- faire pivoter la tête autour de l'arête, de sorte que ledit organe de compactage reste au contact de la bande selon au moins une ligne de contact, ledit pivotement étant réalisé jusqu'à la mise en contact du rouleau de compactage contre la deuxième surface selon au moins une ligne de contact correspondant sensiblement à la largeur de la bande,
- écarter ledit organe de compactage de la surface d'application pour qu'il ne soit plus en contact avec cette dernière, et déplacer la tête pour appliquer la bande sur ladite deuxième surface, selon une deuxième direction (F2) formant un angle α2, sensiblement égale à 180-α1, avec l'arête.

3. Procédé selon la revendication 1, **caractérisé en ce qu'**il comprend, dans le cas d'une surface d'application (90) comprenant une première surface (91) sensiblement plane et une deuxième surface (92) sensiblement plane reliée par une surface arrondie, les étapes suivantes :
- mettre en contact le rouleau de compactage (2, 102, 202) contre la première surface (91) selon au moins une ligne de contact et déplacer la tête d'application pour appliquer une bande (8) de fibres (7) sur ladite première surface, selon une première direction (F1) formant un angle α1 avec la première ligne de jonction (93a) entre la première surface et la surface arrondie,
- déplacer la tête selon ladite première direction, tangentiellement à la première surface, pour amener le rouleau de compactage au-delà de ladite première ligne de jonction, et mettre en contact l'organe de compactage contre la bande appliquée sur la première surface,
- faire pivoter la tête autour de la surface arrondie, de sorte que ledit organe reste au contact de la bande selon au moins une ligne de contact, jusqu'à la mise en contact du rouleau de compactage contre la deuxième surface selon au moins une ligne de contact, et
- écarter ledit organe de compactage de la surface d'application pour qu'il ne soit plus en contact avec cette dernière, et déplacer la tête d'application en contact avec la deuxième surface par son rouleau de compactage selon au moins une ligne de contact pour appliquer la bande sur ladite deuxième surface, selon une direction (F2) formant un angle α2, sensiblement égale à 180-α1, avec la deuxième ligne de jonction entre la surface arrondie et la deuxième surface.

4. Procédé selon la revendication 1, **caractérisé en ce qu'**il comprend, dans le cas d'une surface d'application convexe, les étapes suivantes :
- mettre en contact le rouleau de compactage (2, 102, 202) contre la surface d'application convexe selon au moins un point de contact,
- déplacer la tête tangentiellement à la surface d'application convexe audit point de contact, dans une direction faisant un angle α1 avec la génératrice de la surface convexe passant par ledit point de contact, pour amener le rouleau de compactage au-delà de la génératrice, et
- faire pivoter autour de la surface d'application convexe la tête d'application en appui contre la surface d'application convexe par son organe de compactage, ledit pivotement étant réalisé de sorte que ledit organe reste au contact de la bande selon au moins une ligne de contact.

5. Procédé selon la revendication 3, **caractérisé en ce que**, après mise en contact de l'organe de compactage contre la bande appliquée sur la première surface, le procédé comprend les étapes suivantes :
- faire pivoter la tête autour de la surface arrondie jusqu'à la mise en contact du rouleau de compactage contre la surface d'application, et
- si le rouleau de compactage est en contact selon au moins un point de contact avec la surface arrondie à l'issue dudit pivotement, déplacer la tête tangentiellement à la surface arrondie audit point de contact, dans une direction faisant un angle α1 avec la génératrice de la surface arrondie passant par ledit point de contact, puis faire pivoter la tête autour de la surface arrondie, ces deux étapes de déplacement et de pivotement étant réitérées jusqu'à la mise en contact du rouleau de compactage contre la deuxième surface selon au moins une ligne de contact.

6. Procédé selon la revendication 3, **caractérisé en ce que**, après mise en contact de l'organe de compactage contre la bande appliquée sur la première surface, le procédé comprend les étapes suivantes :
- faire pivoter la tête autour de la surface arrondie, et
- avant que le rouleau de compactage ne vienne en contact selon au moins un point de contact avec la surface arrondie, déplacer la tête tangentiellement à la surface arrondie audit point de contact, dans une direction faisant un angle α1 avec la génératrice de la surface arrondie passant par ledit point de contact, puis faire pivoter la tête autour de la surface arrondie, ces deux étapes de déplacement et de pivotement étant réitérées jusqu'à la mise en contact du rouleau de compactage contre la deuxième surface selon au moins une ligne de contact.

7. Procédé selon la revendication 4, **caractérisé en ce que**, après déplacement de la tête tangentiellement à la surface d'application convexe audit point de contact, le procédé comprend les étapes suivantes :
- faire pivoter autour de la surface d'application convexe la tête d'application en appui contre la surface d'application convexe par son organe de compactage, jusqu'à la mise en contact du rouleau de compactage contre la surface d'application convexe, et
- réitérer les étapes de déplacement et de pivotement précédentes une ou plusieurs fois.

8. Procédé selon la revendication 4, **caractérisé en ce que**, après déplacement de la tête tangentiellement à la surface d'application convexe audit point de contact, le procédé comprend les étapes suivantes :
- faire pivoter autour de la surface d'application convexe la tête d'application en appui contre la surface d'application convexe par son organe de compactage, et
- avant la mise en contact du rouleau de compactage contre la surface d'application convexe, réitérer les étapes de déplacement et de pivotement précédentes une ou plusieurs fois.

9. Procédé selon l'une des revendications 2 à 8, **caractérisé en ce que** l'angle α1 est compris entre 10° et 80°.

10. Machine d'application de fibres, pour la réalisation de pièces en matériaux composites, utilisable pour la mise en oeuvre du procédé selon l'une des revendications 1 à 9 comprenant :
- une tête d'application (1) de fibres, apte à appliquer sur une surface d'application (90) une bande (8) formée de plusieurs fibres (7) plates, et qui comprend un système de compactage comportant un rouleau de compactage (2, 102, 202) destiné à venir en contact contre la surface d'application pour appliquer la bande, et des moyens de guidage de fibres sur ledit rouleau de compactage, et
- un système de déplacement (5) de ladite tête d'application,
ledit système de compactage comprenant en outre un organe de compactage (3, 103, 203) disposé en aval dudit rouleau de compactage et présentant une surface de contact (32, 132, 232) sensiblement plane, ledit organe de compactage étant apte à être amené en appui par sa surface de contact, contre une surface d'application, sur sensiblement toute la largeur d'une bande, selon au moins une ligne de contact,
**caractérisé en ce que** ledit organe de compactage comprend une bande sans fin (130, 230) montée sur un rouleau de renvoi amont (136, 202) et un rouleau de renvoi aval (137, 237), le brin inférieur (138, 238) de la bande sans fin constituant ladite surface de contact (132, 232) de l'organe de compactage.

11. Machine d'application selon la revendication 10, **caractérisée en ce que** ladite bande sans fin (130) est montée sur un rouleau de renvoi amont (136) et un rouleau de renvoi aval (137) les deux rouleaux étant montés en aval du rouleau de compactage, parallèlement à l'axe du rouleau de compactage.

12. Machine d'application selon la revendication 10, **caractérisée en ce que** ledit rouleau de renvoi amont est constitué par ledit rouleau de compactage (202), ladite bande sans fin (230) étant montée sur le rouleau de compactage (202) et un rouleau de renvoi aval (237), ledit rouleau de renvoi aval étant monté en aval et parallèlement au rouleau de compactage, ladite bande sans fin constituant la surface de contact du rouleau de compactage.

13. Machine d'application selon l'une des revendications 10 à 12, **caractérisée en ce que** la tête d'application de fibre comprend une structure support (10) par laquelle ladite tête est assemblée au système de déplacement, l'organe de compactage et le rouleau de compactage sont montés sur ladite structure support de manière fixe l'un par rapport à l'autre.

## Patentansprüche

1. Verfahren zur Aufbringung eines Streifens (8), der aus mehreren Fasern (7) gebildet ist, auf:
- eine Aufbringungsfläche (90), umfassend eine erste Fläche (91),die im Wesentlichen eben ist, und eine zweite Fläche (92), die im Wesentlichen eben ist, verbunden durch einen Grat oder eine abgerundete Fläche (93),
- oder auf einer konvexen Aufbringungsfläche,
wobei die Aufbringung des Streifens mit Hilfe eines Kopfes zur Aufbringung von Fasern (1) erfolgt, der ein Kompaktierungssystem umfasst, umfassend eine Kompaktierungsrolle (2, 102, 202), wobei das Verfahren das In-Kontakt-Bringen der Kompaktierungsrolle mit der Aufbringungsfläche und das Verschieben des Kompaktierungskopfes umfasst, um einen Faserstreifen auf die Aufbringungsfläche aufzubringen, wobei das Verfahren **dadurch gekennzeichnet ist, dass** es die folgenden Schritte umfasst:
- In-Kontakt-Bringen mit dem Faserstreifen, der auf die Aufbringungsfläche aufgebracht wurde, eines Kompaktierungsorgans (3, 103, 203) des Kompaktierungssystems, das nachgelagert von der Kompaktierungsrolle (2, 102, 202) mit Bezug auf die Vorschubrichtung (F1, F2) des Kopfes angeordnet ist, wobei das Kompaktierungsorgan im Wesentlichen mit der Gesamtheit der Fasern des Streifens entlang mindestens einer Kontaktlinie in Kontakt ist,
- Drehenlassen des Kopfes um den Grat, um die abgerundete Fläche (93) oder um die konvexe Fläche, so dass das Kompaktierungsorgan mit dem Streifen in Kontakt bleibt, um ihn entlang mindestens einer Kontaktlinie zu kompaktieren, im Wesentlichen ohne Gleiten zwischen dem Kompaktierungsorgan und der Aufbringungsfläche.

2. Verfahren nach Anspruch 1, **dadurch gekennzeichnet, dass** es, für den Fall einer Aufbringungsfläche, die eine erste Fläche umfasst, die im Wesentlichen eben ist, und eine zweite Fläche, die im Wesentlichen eben und durch einen Grat verbunden ist, die Folgenden Schritte umfasst:
- In-Kontakt-Bringen der Kompaktierungsrolle (2, 102, 202) mit der ersten Fläche entlang mindestens einer Kontaktlinie, und Verschieben des Aufbringungskopfes, um einen Streifen (8) aus Fasern (7) auf die erste Fläche entlang einer ersten Richtung (F1) aufzubringen, die einen Winkel α1 mit dem Grat bildet,
- Verschieben des Kopfes entlang der ersten Richtung, tangential zur ersten Fläche, um die Kompaktierungsrolle im Wesentlichen über den Grat hinaus zu bringen und In-Kontakt-Bringen des Kompaktierungsorgans mit dem Streifen, der auf die erste Fläche aufgebracht wurde,
- Drehenlassen des Kopfes um den Grat, so dass das Kompaktierungsorgan mit dem Streifen entlang mindestens einer Kontaktlinie in Kontakt bleibt, wobei die Drehung bis zum In-Kontakt-Bringen der Kompaktierungsrolle mit der zweiten Fläche entlang einer Kontaktlinie durchgeführt wird, die im Wesentlichen der Breite des Streifens entspricht.
- Entfernen des Kompaktierungsorgans von der Aufbringungsfläche damit es nicht mehr mit dieser Letzteren in Kontakt steht, und Verschieben des Kopfes, um den Streifen auf die zweite Fläche entlang einer zweiten Richtung (F2) aufzubringen, die einen Winkel α2, der im Wesentlichen 180-α1 entspricht, mit dem Grat bildet.

3. Verfahren nach Anspruch 1, **dadurch gekennzeichnet, dass** es, für den Fall einer Aufbringungsfläche (90), die eine erste Fläche (91) umfasst, die im Wesentlichen eben ist, und eine zweiten Fläche (92), die im Wesentlichen eben ist, verbunden durch eine abgerundete Fläche, die Folgenden Schritte umfasst:
- In-Kontakt-Bringen der Kompaktierungsrolle (2, 102, 202) mit der ersten Fläche (91) entlang mindestens einer Kontaktlinie, und Verschieben des Aufbringungskopfes, um einen Streifen (8) aus Fasern (7) auf die erste Fläche entlang einer ersten Richtung (F1) aufzubringen, die einen Winkel α1 mit der ersten Verbindungslinie (93a) zwischen der ersten Fläche und der abgerundeten Fläche bildet,
- Verschieben des Kopfes entlang der ersten Richtung, tangential zur ersten Fläche, um die Kompaktierungsrolle über die erste Verbindungslinie hinaus zu bringen, und In-Kontakt-Bringen des Kompaktierungsorgans mit dem Streifen, der auf die erste Fläche aufgebracht wurde,
- Drehenlassen des Kopfes um die abgerundete Fläche, so dass das Kompaktierungsorgan mit dem Streifen entlang mindestens einer Kontaktlinie in Kontakt bleibt, bis zum In-Kontakt-Bringen der Kompaktierungsrolle mit der zweiten Fläche entlang mindestens einer Kontaktlinie, und
- Entfernen des Kompaktierungsorgans von der Aufbringungsfläche, damit es nicht mehr mit dieser Letzteren in Kontakt steht, und Verschieben des Aufbringungskopfes in Kontakt mit der zweiten Fläche durch seine Kompaktierungsrolle entlang mindestens einer Kontaktlinie, um den Streifen auf die zweite Fläche entlang einer Richtung (F2) aufzubringen, die einen Winkel α2, der im Wesentlichen 180-α1 entspricht, mit der zweiten Verbindungslinie zwischen der abgerundeten Fläche und der zweiten Fläche bildet.

4. Verfahren nach Anspruch 1, **dadurch gekennzeichnet, dass** es, für den Fall einer konvexen Aufbringungsfläche, die folgenden Schritte umfasst:
- In-Kontakt-Bringen der Kompaktierungsrolle (2, 102, 202) mit der konvexen Aufbringungsfläche an mindestens einem Kontaktpunkt,
- Verschieben des Kopfes tangential zur konvexen Aufbringungsfläche an den Kontaktpunkt in einer Richtung, die einen Winkel α1 mit der Erzeugenden der konvexen Fläche bildet, die durch den Kontaktpunkt verläuft, um die Kompaktierungsrolle über die Erzeugende hinaus zu bringen, und
- Drehenlassen um die konvexe Aufbringungsfläche des Aufbringungskopfes der gegen die konvexe Aufbringungsfläche durch sein Kompaktierungsorgan aufliegt, wobei die Drehung derart durchgeführt wird, dass das Organ mit dem Streifen entlang mindestens einer Kontaktlinie in Kontakt bleibt.

5. Verfahren nach Anspruch 3, **dadurch gekennzeichnet, dass** nach dem In-Kontakt-Bringen des Kompaktierungsorgans mit dem Streifen, der auf die erste Fläche aufgebracht wurde, das Verfahren die folgenden Schritte umfasst:
- Drehenlassen des Kopfes um die abgerundete Fläche, bis zum In-Kontakt-Bringen der Kompaktierungsrolle mit der Aufbringungsfläche, und
- wenn die Kompaktierungsrolle an mindestens einem Kontaktpunkt mit der abgerundeten Fläche am Ende der Drehung in Kontakt steht, Verschieben des Kopfes tangential zur abgerundeten Aufbringungsfläche an den Kontaktpunkt in einer Richtung, die einen Winkel α1 mit der Erzeugenden der abgerundeten Fläche bildet, die durch den Kontaktpunkt verläuft, dann Drehenlassen des Kopfes um die abgerundete Fläche, wobei diese beiden Schritte des Verschiebens und des Drehens wiederholt werden, bis zum In-Kontakt-Bringen der Kompaktierungsrolle mit der zweiten Fläche entlang mindestens einer Kontaktlinie.

6. Verfahren nach Anspruch 3, **dadurch gekennzeichnet, dass** nach dem In-Kontakt-Bringen des Kompaktierungsorgans mit dem Streifen, der auf die erste Fläche aufgebracht wurde, das Verfahren die folgenden Schritte umfasst:
- Drehenlassen des Kopfes um die abgerundete Fläche, und
- bevor die Kompaktierungsrolle an mindestens einem Kontaktpunkt mit der abgerundeten Fläche in Kontakt kommt, Verschieben des Kopfes tangential zur abgerundeten Fläche an den Kontaktpunkt in einer Richtung, die einen Winkel α1 mit der Erzeugenden der abgerundeten Fläche bildet, die durch den Kontaktpunkt verläuft, dann Drehenlassen des Kopfes um die abgerundete Fläche, wobei diese beiden Schritte des Verschiebens und des Drehens wiederholt werden, bis zum In-Kontakt-Bringen der Kompaktierungsrolle mit der zweiten Fläche entlang mindestens einer Kontaktlinie.

7. Verfahren nach Anspruch 4, **dadurch gekennzeichnet, dass** nach dem Verschieben des Kopfes tangential zur konvexen Aufbringungsfläche an den Kontaktpunkt das Verfahren die folgenden Schritte umfasst:
- Drehenlassen um die konvexe Aufbringungsfläche des Aufbringungskopfes der gegen die konvexe Aufbringungsfläche durch sein Kompaktierungsorgan aufliegt, bis zum In-Kontakt-Bringen der Kompaktierungsrolle mit der konvexen Aufbringungsfläche, und
- Wiederholen der vorhergehenden Schritte des Verschiebens und des Drehens ein oder mehrere Male.

8. Verfahren nach Anspruch 4, **dadurch gekennzeichnet, dass** nach dem Verschieben des Kopfes tangential zur konvexen Aufbringungsfläche an den Kontaktpunkt das Verfahren die folgenden Schritte umfasst:
- Drehenlassen um die konvexe Aufbringungsfläche des Aufbringungskopfes der gegen die konvexe Aufbringungsfläche durch sein Kompaktierungsorgan aufliegt, und
- vor dem In-Kontakt-Bringen der Kompaktierungsrolle mit der konvexen Aufbringungsfläche, Wiederholen der vorhergehenden Schritte des Verschiebens und des Drehens ein oder mehrere Male.

9. Verfahren nach einem der Ansprüche 2 bis 8, **dadurch gekennzeichnet, dass** der Winkel α1 zwischen 10° und 80° liegt.

10. Gerät zur Anwendung von Fasern zur Herstellung von Stücken aus Verbundmaterialien, die für die Durchführung des Verfahrens nach einem der Ansprüche 1 bis 9 verwendet werden kann, umfassend:
- einen Kopf zur Aufbringung von Fasern (1), der ausgelegt ist, um auf eine Aufbringungsfläche (90) einen Streifen (8) aufzubringen, der aus mehreren flachen Fasern (7) gebildet ist, und der ein Kompaktierungssystem umfasst, das eine Kompaktierungsrolle (2, 102, 202) umfasst, die ausgelegt ist, um mit der Aufbringungsfläche in Kontakt zu kommen, um den Streifen aufzubringen, und Mittel zur Führung von Fasern auf der Kompaktierungsrolle, und
- ein System zur Verschiebung (5) des Aufbringungskopfes,
wobei das Kompaktierungssystem außerdem ein Kompaktierungsorgan (3, 103, 203) umfasst, das nachgelagert von der Kompaktierungsrolle angebracht ist und eine Kontaktfläche (32, 132, 232) aufweist, die im Wesentlichen eben ist, wobei das Kompaktierungsorgan ausgelegt ist, um durch seine Kontaktfläche gegen eine Aufbringungsfläche auf im Wesentlichen der gesamten Breite eines Streifens entlang mindestens einer Kontaktlinie in Auflage gebracht zu werden,
**dadurch gekennzeichnet, dass** das Kompaktierungsorgan einen Endlosstreifen (130, 230) umfasst, der auf einer vorgelagerten Umlenkrolle (136, 202) und einer nachgelagerten Umlenkrolle (137, 237) montiert ist, wobei der untere Strang (138, 238) des Endlosstreifens die Kontaktfläche (132, 232) des Kompaktierungsorgans bildet.

11. Gerät zum Aufbringen nach Anspruch 10, **dadurch gekennzeichnet, dass** das Endlosband (130) auf einer vorgelagerten Umlenkrolle (136) und einer nachgelagerten Umlenkrolle (137) montiert ist, wobei die zwei Rollen nachgelagert von der Kompaktierungsrolle, parallel zur Achse der Kompaktierungsrolle, montiert sind.

12. Gerät zum Aufbringen nach Anspruch 10, **dadurch gekennzeichnet, dass** die vorgelagerte Umlenkrolle aus der Kompaktierungsrolle (202) gebildet ist, wobei das Endlosband (230) auf der Kompaktierungsrolle (202) und einer nachgelagerten Umlenkrolle (237) montiert ist, wobei die nachgelagerte Umlenkrolle nachgelagert und parallel zur Kompaktierungsrolle montiert ist, wobei der Endlosstreifen die Kontaktfläche der Kompaktierungsrolle bildet.

13. Gerät zum Aufbringen nach einem der Ansprüche 10 bis 12, **dadurch gekennzeichnet, dass** der Kopf zur Aufbringung von Fasern eine Stützstruktur (10) umfasst, durch die der Kopf mit dem Verschiebungssystem verbunden ist, wobei das Kompaktierungsorgan und die Kompaktierungsrolle auf der Stützstruktur auf fest mit Bezug aufeinander montiert sind.

## Claims

1. A method for applying a band (8) formed of several fibers (7), on
- an application surface (90) comprising a first substantially plane surface (91) and a second substantially plane surface (92) connected by a edge or a rounded surface (93),
- or on a convex application surface,
the application of the band being carried out by means of a fiber application head (1) that comprises a compacting system including a compacting roller (2, 102, 202), said method comprising contacting the compacting roller against the application surface and moving the compacting head to apply a band of fibers on the application surface, said method being **characterized in that** it comprises the following steps:
- contacting, against the band of fibers applied on the application surface, a compacting member (3, 103, 203) of the compacting system, placed downstream from the compacting roller (2, 102, 202) with respect to the progress direction (F 1, F2) of the head, said compacting member being substantially in contact against all the fibers of the band by at least one contact line,
- pivoting the head around the edge, around the rounded surface (93) or around the convex surface, such that said compacting member remains in contact with the band to compact it, by at least one contact line, substantially without sliding between said compacting member and the application surface.

2. The method according to claim 1, **characterized in that** it comprises, in the case of an application surface comprising a first substantially plane surface and a second substantially plane surface connected by a edge, the following steps:
- contacting the compacting roller (2, 102, 202) against the first surface by at least one contact line, and moving the application head to apply a band (8) of fibers (7) on said first surface, in a first direction (F1) forming an angle α1 with the edge,
- moving the head in said first direction, tangentially to the first surface, to bring the compacting roller substantially beyond said edge, and contacting the compacting member against the band applied on the first surface,
- pivoting the head around the edge, such that said compacting member remains in contact with the band by at least one contact line, said pivoting being carried out until the compacting roller contacts against the second surface by at least one contact line substantially corresponding to the width of the band,
- spacing apart said compacting member from the application surface so that it is no longer in contact therewith, and moving the head to apply the band on said second surface, in a second direction (F2) forming an angle α2 with the edge, substantially equal to 180-α1,

3. The method according to claim 1, **characterized in that** it comprises, in the case of an application surface (90) comprising a first substantially plane surface (91) and a second substantially plane surface (92) connected by a rounded surface, the following steps:
- contacting the compacting roller (2, 102, 202) against the first surface (91) by at least one contact line and moving the application head to apply a band (8) of fibers (7) on said first surface, in a first direction (F1) forming an angle α1 with the first junction line (93 a) between the first surface and the rounded surface,
- moving the head in said first direction, tangentially to the first surface, to bring the compacting roller beyond said first junction line, and contacting the compacting member against the band applied on the first surface,
- pivoting the head around the rounded surface, such that said member remains in contact with the band by at least one contact line, until the contacting of the compacting roller against the second surface by at least one contact line, and
- spacing apart said compacting member from the application surface so that it is no longer in contact therewith, and moving the application head contacting the second surface by its compacting roller by at least one contact line to apply the band on said second surface, in a direction (F2) forming an angle α2, substantially equal to 180-α1, with the second junction line between the rounded surface and the second surface.

4. The method according to claim 1, **characterized in that** it comprises, in the case of a convex application surface, the following steps:
- contacting the compacting roller (2, 102, 202) against the convex application surface by at least one contact point,
- moving the head tangentially to the convex application surface to said contact point in a direction forming an angle α1 with the generatrix line of the convex surface passing by said contact point to bring the compacting roller beyond said generatrix line, and
- pivoting around the convex application surface the application head pressed against the convex application surface by its compacting member, said pivoting being carried out such that said member remains in contact with the band by at least one contact line.

5. The method according to claim 3, **characterized in that**, after applying the compacting member against the band applied on the first surface, the method comprises
- pivoting the fiber application head around the rounded surface until contacting the compacting roller against the application surface, and
- if the compacting roller is in contact on at least one contact point with the rounded surface at the end of said pivoting, moving the fiber application head tangentially to the rounded surface to said contact point, in a direction forming an angle α1 with the generatrix line of the rounded surface passing by said contact point, then pivoting the fiber application head around the rounded surface, these two moving and pivoting steps being reiterated until contacting the compacting roller against the second surface by at least one contact line.

6. The method according to claim 3, **characterized in that**, after applying the compacting member against the band applied on the first surface the method comprises
- pivoting the fiber application head around the rounded surface, and
- before the compacting roller comes into in contact on at least one contact point with the rounded surface, moving the fiber application head tangentially to the rounded surface to said contact point, in a direction forming an angle α1 with the generatrix line of the rounded surface passing by said contact point, then pivoting the fiber application head around the rounded surface, these two moving and pivoting steps being reiterated until contacting the compacting roller against the second surface by at least one contact line.

7. The method according to claim 4, **characterized in that**, after moving the fiber application head tangentially to the convex application surface to said contact point, the method comprises
- pivoting around the convex application surface, the fiber application head pressed against the convex application surface by its compacting member, until contacting the compacting roller against the convex application surface, and
- reiterating the previous moving and pivoting steps once or more times.

8. The method according to claim 4, **characterized in that** after moving the fiber application head tangentially to the convex application surface to said contact point, the method comprises
- pivoting around the convex application surface, the fiber application head pressed against the convex application surface by its compacting member, and
- before contacting the compacting roller against the convex application surface, reiterating the previous moving and pivoting steps once or more times.

9. The method according to one of claims 2 to 8, **characterized in that** the angle α1 is comprised between 10° and 80°.

10. A fiber application machine, for producing parts in composite material, usable for the implementation of the method according to one of claims 1 to 9 comprising:
- a fiber application head (1), capable of applying on an application surface (90) a band (8) formed of a plurality of flat fibers (7), and that comprises a compacting system including a compacting roller (2, 102, 202) intended to come in contact against the application surface to apply the band, and fiber guiding means for guiding fibers on said compacting roller, and
- a moving system (5) for moving said application head,
said compacting system further comprising a compacting member (3, 103, 203) placed downstream from said compacting roller and exhibiting a substantially plane contact surface (32, 132, 232), said compacting member being capable to be pressed by its contact surface, against an application surface, substantially on the entire width of a band, by at least one contact line,
**characterized in that** said compacting member comprises an endless band (130, 230) mounted on an upstream return roller (136, 202) and a downstream return roller (137, 237), the lower strand (138, 238) of the endless band constituting said contact surface (132, 232) of the compacting member.

11. The application machine according to claim 10, **characterized in that** said endless band (130) is mounted on an upstream return roller (136) and a downstream return roller (137), both rollers being mounted downstream from the compacting roller, parallely to the axis of the compacting roller.

12. The application machine according to claim 10, **characterized in that** said upstream return roller is constituted by the compacting roller (202) said endless belt (230) being mounted on the compacting roller (202) and a downstream return roller (237), said downstream return roller being mounted downstream and parallely to the compacting roller.

13. The application machine according to one of claims 10 to 12, **characterized in that** the fiber application head comprises a support structure (10) whereby said head is assembled to the moving system, the compacting member and the compacting roller are fixedly mounted on said support structure with respect to each other.
